# EUROPÄISCHE PATENTANMELDUNG

(11) **EP 3 073 375 A1**
(43) Veröffentlichungstag der Anmeldung: **28.09.2016**
(21) Anmeldenummer: 16000696.1
(22) Anmeldetag: 23.03.2016
(51) Int. Cl.: G06F 9/48

(54) **VERFAHREN ZUR ERMITTLUNG EINER MAXIMALEN LAUFZEIT FÜR EIN TASKSYSTEM**

(30) Priorität: 26.03.2015 DE 102015104606
(71) Anmelder: Elektronische Fahrwerksysteme GmbH, 85080 Gaimersheim (DE)
(72) Erfinder: Jürgens, Dominik, 85072 Eichstätt (DE)
(74) Vertreter: Petri, Lars

(57) **Zusammenfassung**

Verfahren zur Ermittlung einer maximalen Laufzeit für ein Tasksystem aus N verschiedenen periodischen Tasks (11, 12) auf einem Steuergerät umfassend einen Rechner und einen Speicher, wobei jeder von dem Rechner periodisch abzuarbeitende Task (11, 12), eine Startzeit S, eine Endzeit E, eine Ausführungszeit T und eine Periodendauer O ab einem gemeinsamen Startzeitpunkt bis zum Aktivierungszeitpunkt des jeweiligen Tasks hat, mit folgenden Schritten:
- Bestimmen der Periodendauer O₁,...,O_{N} von allen n = 1...N Tasks (11, 12) des Tasksystems;
- Festlegen einer Messperiode K als das kleinste gemeinsamen Vielfache der auftretenden Periodendauern O₁,...,O_{N} der N Tasks (11, 12);
- Festlegung der Häufigkeit M₁,...,M_{N} für jede Taskaktivierung innerhalb der Messperiode als Quotient der einzelnen Periodendauern und der Messperiode K zu M₁=K/O₁,...,M_{N}=K/O_{N};
- Bestimmen der Gesamtanzahl an Taskaktivierungen M innerhalb der Messperiode K als die Summe der einzelnen Häufigkeiten zu M=M₁+M₂+...+M_{N};
- Bestimmen aller M Startzeiten S(1,1),...,S(N,M_{N}) und Endzeiten E(1,1),...,E(N,Mₙ), aller M Startzeiten S(1,1),...,S(N,M_{N}) und Ausführungszeiten T(1,1),...,T(N,M_{N}) oder aller M Endzeiten E(1,1),..., E(N,M_{N}) und Ausführungszeiten T(1,1),...,T(N,M_{N}), wobei diese in der Form
a) xᵢ=(S(1,1), E(1,1), S(1,2), E(1,2)...,S(1,M₁),...,S(n,1),...,E(N,M_{N}); oder
b) xᵢ=(S(1,1), T(1,1), S(1,2), T(1,2)...,S(1,M₁),...,S(n,1),...,T(N,M_{N}); oder
c) xᵢ=(T(1,1), E(1,1), T(1,2), E(1,2)...,T(1,M₁),...,T(n,1),...,E(N,M_{N}); jeweils für jede der i Messperioden i=1,.., I einander zuordenbar gespeichert werden;

- Bestimmung von M maximalen Ausführungszeiten T(1,1)ₘₐₓ,...,T(n,M_{N})ₘₐₓ über alle I Messperioden; und
- Ermittlung der maximalen Laufzeit für das Tasksystem aus der Summe aller M_{N} maximalen Ausführungszeiten T(n,1)ₘₐₓ,...,T(n,M_{N})ₘₐₓ.

## Beschreibung

Die Erfindung betrifft ein Verfahren zur Ermittlung einer maximalen Laufzeit für ein Tasksystem.

Eine von einem Rechner in einem Steuergerät ausgeführte Aufgabe (Prozess, Berechnung, Steuerung, Regelung, etc.) wird üblicherweise als "Task" bezeichnet. Im Folgenden bezeichnet Task allgemein jede auf einem Steuergerät ausgeführte Aufgabe mit einem Anfang (Startzeit S) und einem Ende (Endzeit E).

Derartige Steuergeräte umfassen einen Rechner und einen Speicher zum Abarbeiten eines Tasks bzw. eines Tasksystems aus mehreren einzelnen Tasks. Beim Abarbeiten werden elektronische Bauteile gesteuert oder geregelt. Anwendung finden solche Steuergeräte zum Beispiel im Kfz-Bereich, wo diese heute standardmäßig eingesetzt werden um Informationen von Sensoren zu verarbeiten und/oder Aktoren anzusteuern. Ist das Steuergerät in so einen technischen Kontext eingebunden, spricht man von eingebetteten Systemen. Das eingebettete Steuergerät übernimmt beispielsweise Überwachungs-, Steuerungs- oder Regelfunktionen oder ist für die Daten- bzw. Signalverarbeitung zuständig.

Jeder von dem Rechner abzuarbeitende periodische Task hat eine Startzeit S, eine Endzeit E, eine Ausführungsdauer T und eine Periodendauer O. Von einem Tasksystem aus N verschiedenen periodischen Tasks spricht man, wenn eine Anzahl von N Tasks auf einem Steuergerät ausgeführt wird, egal ob gleichzeitig oder nacheinander. Das Tasksystem aus N Tasks wird durch die Startzeiten S(1,1),..., S(N,M_{N}), Endzeiten E(1,1)...E(N,M_{N}) und Ausführungszeiten T(1,1),...,T(N,M_{N}) aller N Tasks vollständig bestimmt. Dabei ist Mₙ die Häufigkeit der Taskaktivierung von Task n = 1...N. So sind paarweise die Startzeiten S und Endzeiten E, Startzeiten S und Ausführungszeiten T oder Endzeiten E und Ausführungszeiten T zu speichern.

Für ein Tasksystem aus n = 1 ... N periodischen Tasks mit jeweils unterschiedlicher Periodendauern O₁, ..., O_{N} lässt sich eine Hyperperiode bestimmen, indem das kleinste gemeinsame Vielfache der Periodendauern ermittelt wird. Als Periodendauer O bezeichnet man den zeitlichen Abstand nach dem diese Tasks wiederholt durchgeführt werden, also zwischen zwei aufeinanderfolgenden Startzeiten (S₁ und S₂) oder zwei aufeinanderfolgenden Endzeiten (E1 und E2) desselben Tasks. Es gibt aperiodische Tasks und periodische Tasks, wobei periodische Tasks in regelmäßigen Zeitintervallen kontinuierlich stattfinden. Innerhalb der Hyperperiode laufen alle periodischen Tasks mindestens einmal oft aber mehrfach ab, so dass es insgesamt M = M₁+... +M_{N}) Taskaktivierungen gibt. In der vorliegenden Anmeldung wird für eine Hyperperiode K der Begriff Messperiode verwendet, wobei die Messperiode prinzipiell auch Tasks enthalten kann, die nur einmal auftreten.

Ein Verfahren zur Ermittlung einer maximalen Laufzeit für ein Tasksystem wird zum Beispiel bei der Echtzeitanalyse von Tasksystemen angewendet. Dabei wird angenommen, dass für ein Tasksystem, das Echtzeitbedingungen erfüllen soll, die maximale Laufzeit bestimmbar sein muss. Dazu werden die Ausführungszeiten aller vom Steuergerät ausgeführten Tasks berücksichtigt. Im Stand der Technik ist aus "S.K. Baruah, A. Burns, R.I. Davis: "Response-Time Analysis for Mixed Criticality Systems" RTSS, 2011 IEEE 32 nd, 34-43, 2011" ein Verfahren zu Echtzeitscheduling bekannt, welches Mechanismen zur Verfügung stellt, um ein zu zertifizierendes Verhalten sicherzustellen. Dabei wird davon ausgegangen, dass ein Task genau eine maximale Ausführungszeit besitzt. In periodischen Tasksystemen ist diese Eigenschaft allerdings in der Regel zu streng, da ein Task in der Regel abhängig von seinem inneren Zustand periodische Variationen seiner Laufzeit aufweist. Hier gilt ein Tasksystem als nicht in Echtzeit abarbeitbar, wenn die akkumulierte "worst-case" Laufzeit in einem Zeitintervall die Intervalllänge übersteigt. Der Nachteil daran ist, dass die inneren periodischen Variationen der Laufzeit aller Tasks nicht bei der Ermittlung der maximalen Laufzeit des Tasksystems berücksichtigt werden.

Ein anderes Verfahren dazu ist aus S. Chakraborty, S. Künzli, L. Thiele: "Approximate Schedulability Analysis", 23rd IEEE Real-Time Systems Symposium (RTSS), IEEE Press, 159-168, 2002, bekannt. Dabei handelt es sich um ein Verfahren zur Analyse der Durchführbarkeit eines Taskzeitplans. Hier wird eine Bedarfsobergrenzenfunktion (demand-bound function) definiert, welche für jeden Task verschiedene Realisierungen erlaubt. Dieses Vorgehen ist mathematisch abstrakt und berücksichtigt ebenfalls nicht periodische innere Varianten jedes Tasks.

Im Artikel "Relaxing Mixed-Criticality Scheduling Strictness for Task Sets Scheduled with FP." DOI: 10.1109/ECRTS.2012.39; Conference: Real-Time Systems (ECRTS), 2012 24th" wird ein Modell beschrieben, das auf Vektoren basiert. Die Vektoren modellieren hier eine WCET pro Task, daher ist erneut kein Modell für innere Perioden von Tasks dargestellt.

Die Annahme, dass jeder Task eine maximale Ausführungszeit, eine "Worst Case Execution Time - WCET" hat, ist eine starke Vereinfachung, insofern nicht-deterministische Einflüsse, z.B. über Caches, Out-of-Order Execution, Branch Prediction auf die Ausführungszeit Einfluss nehmen und die reale Ausführungszeit damit deutlich unter der WCET liegt. Damit ergeben sich vor allem Probleme bei modernen Prozessoren, die keine deterministische Ausführungszeit haben. Hier entstehen durch die WCET Betrachtung Leerlaufzeiten, die bei einer genauen Betrachtung und Messung der realen Bedingungen auf dem Prozessor unnötig sein können. Schon bei einfachen Iterationen (Newton Verfahren zum Lösen nichtlinearer Gleichungen) ergibt sich keine Oberschranke für die Anzahl der Iterationsschritte.

Ferner ist aus Carzola, F.J. et al.: PROARTIS: Probabilistically Analysable Real-Time Systems; Rapport de recherche No. 7869; 26. 1. 2012; bekannt, ein Echtzeitsystem unter Berücksichtigung von Wahrscheinlichkeiten zu analysieren. Es wird eine Timing Analyse vorgeschlagen, die Wahrscheinlichkeitsverteilungen berücksichtigt, um verbesserte WCET Abschätzungen zu erreichen. Dabei werden die über einen inneren Zustand periodisch durchlaufenden Schwankungen in der Laufzeit als statistische Varianz betrachtet. Mit diesem Ansatz ist es nicht möglich die periodische Variabilität der Laufzeit von der tatsächlich nicht-deterministischen Laufzeit zu unterscheiden.

Im Stand der Technik wird nicht berücksichtigt, dass bei Tasksystemen mit periodischen Tasks die Ausführungszeiten beim wiederholten Abarbeiten nicht identisch sind, sondern eine gewisse Dynamik, d.h. Abweichungen von einer erwarteten Ausführungszeit, haben. Bei einem dynamischen Tasksystem schwankt die Ausführungszeit zum Abarbeiten eines Tasks mit einer Abweichung, deren Größe als Jitter (Fehler) bezeichnet wird. Die Schwankungen der Ausführungszeiten werden von deterministischen (periodischen) und nicht-deterministischen (zufälligen) Einflüsse verursacht.

Im Stand der Technik werden alle Schwankungen als nicht-deterministisch behandelt und der deterministische Anteil der Ausführungszeit wird nicht weiter berücksichtigt. Dadurch verlieren Messungen automatisch an Präzision, da die Varianz der Laufzeit auf diese Weise künstlich vergrößert wird. Bei der WCET wird ebenfalls keine Schwankung der Ausführungszeit berücksichtigt und es wird angenommen, dass die tatsächliche Rechenzeit die als am ungünstigsten angenommene Ausführungszeit für einen Task nicht überschreitet und anhand dieser Ausführungszeit die Laufzeit des Tasksystems abgeschätzt.

Mit solchen Verfahren lassen sich die tatsächlichen Ausführungszeiten nur ungenau vorhersagen, insofern die WCET auf einer Schätzung beruht, bei der die tatsächlichen Fluktuationen in der Ausführungszeit einzelner Tasks unberücksichtigt bleiben.

Es ist die Aufgabe der vorliegenden Erfindung ein Verfahren zur Ermittlung einer maximalen Laufzeit für ein Tasksystem bereitzustellen, das die im Stand der Technik genannten Nachteile nicht hat. Insbesondere sollen die periodischen und nichtperiodischen Anteile der Ausführungszeit quantifizierbar sein, so dass sich die maximale Laufzeit genauer bestimmen lässt.

Diese Aufgabe wird durch das Verfahren gemäß dem unabhängigen Verfahrensanspruch gelöst. Vorteilhafte Aspekte bilden den Gegenstand der abhängigen Ansprüche.

Die Erfindung umfasst ein Verfahren zur Ermittlung einer maximalen Laufzeit für ein Tasksystem aus N verschiedenen periodischen Tasks auf einem Steuergerät umfassend einen Rechner und einen Speicher, wobei jeder von dem Rechner periodisch abzuarbeitende Task, eine Startzeit S, eine Endzeit E, eine Ausführungszeit T und eine Periodendauer O ab einem gemeinsamen Startzeitpunkt bis zum Aktivierungszeitpunkt des jeweiligen Tasks hat, mit folgenden Schritten:
- Bestimmen der Periodendauer O₁, ..., O_{N} von allen n = 1...N Tasks des Tasksystems;
- Festlegen einer Messperiode K als das kleinste gemeinsamen Vielfache der auftretenden Periodendauern O₁, ...,O_{N} der N Tasks;
- Festlegung der Häufigkeit M₁,...,M_{N} für jede Taskaktivierung innerhalb der Messperiode als Quotient der einzelnen Periodendauern und der Messperiode K zu M₁=K/O₁,,.., M_{N}=K/O_{N};
- Bestimmen der Gesamtanzahl an Taskdurchläufen innerhalb der Messperiode K als die Summe der einzelnen Häufigkeiten zu M=M₁+M₂+...+M_{N};
- Bestimmen aller M Startzeiten S(1,1),...,S(N,M_{N}) und Endzeiten E(1,1)...E(N,Mₙ), aller Startzeiten S(1,1),...,S(N,M_{N}) und Ausführungszeiten T(1,1),...,T(N,M_{N}) oder aller Endzeiten E(1,1),...,E(N,M_{N}) und Ausführungszeiten T(1,1),...,T(N,M_{N}), wobei diese in der Form
   a) xᵢ=(S(1,1), E(1,1), S(1,2), E(1,2)..., S(1,M₁),..., S(n,1),..., E(N,M_{N}); oder
   b) xᵢ=(S(1,1), T(1,1), S(1,2), T(1,2)..., S(1,M₁),..., S(n,1),..., T(N,M_{N}); oder
   c) xᵢ=(T(1,1), E(1,1), T(1,2), E(1,2)..., T(1,M₁),..., T(n,1),..., E(N,M_{N}); jeweils für jede der i Messperioden i=1,.., I einander zuordenbar gespeichert werden;
      - Bestimmung von M maximalen Ausführungszeiten T(1,1)ₘₐₓ , ...,T(n,M_{N})ₘₐₓ über alle I Messperioden; und
      - Ermittlung der maximalen Laufzeit für das Tasksystem aus der Summe aller M_{N} maximalen Ausführungszeiten T(n,1)ₘₐₓ, ..., T(n,M_{N})ₘₐₓ.

Mit dem Verfahren wird die maximale Laufzeit für das Tasksystem aus der Summe der Mₙ maximalen Ausführungszeiten aller einzelnen Tasks ermittelt, wobei zur Bestimmung der maximalen Ausführungszeiten jede Taskaktivierung berücksichtigt wird. Es werden alle einzelnen Ausführungszeiten berücksichtigt, indem diese zuordenbar gespeichert werden. So kann für jeden Task und alle Taskaktivierungen das Maximum der Ausführungszeit unter Berücksichtigung der periodische Variationen seiner Laufzeit ermittelt werden. Aufgrund der Berücksichtigung aller Ausführungszeiten lässt sich die Dynamik, d.h. Abweichungen von einer erwarteten Ausführungszeit, bei der Ermittlung einer maximalen Laufzeit mitberücksichtigen. Weil periodische und nicht-periodische Anteile der Ausführungszeit quantifiziert werden, können periodische Abweichung bei der Ermittlung der maximalen Laufzeit berücksichtigt werden, mit denen bei einem dynamischen Tasksystem die Ausführungszeit zum Abarbeiten eines Tasks systematisch schwankt (z.B. Jitter).

Gemäß einem bevorzugten Aspekt des Verfahrens wird zur Ermittlung einer maximalen Prozessorlast P innerhalb aller I Messperioden der Quotient der Summe aller M maximalen Ausführungszeiten T(1,1)ₘₐₓ , ... , T(N,MN)max und der Messperiode K gebildet. So kann die Auslastung des Steuergeräts unter Berücksichtigung der genauen maximalen Ausführungszeiten aus der Ermittlung der maximalen Laufzeit ermittelt werden.

Bevorzugt werden Anhand der M maximalen Ausführungszeiten T(1,1)_{max,} ..., T(N,M_{N})ₘₐₓ eine Abarbeitungsfolge zur Zeitsteuerung gebildet. Dabei wird die Abarbeitungsfolge (Reihenfolge der abgearbeiteten Tasks) derart gewählt, dass die periodischen Maximallaufzeiten verschiedener Tasks so über die Periode verteilt werden, dass die Last (Rechenlast) derart optimiert wird, um die Überlastwahrscheinlichkeit unter einem vorbestimmten Schwellwert zu senken. So kann die Prozessorauslastung optimiert werden, unter Verwendung der genau ermittelten periodischen Ausführungszeitschwankungen.

Vorteilhafterweise erfolgt der Schritt der Bestimmung von M maximalen Ausführungszeiten T(1,1)ₘₐₓ,...,T(N,M_{N})ₘₐₓ für mindestens zwei (verschiedene) Messperioden i=1,...,1 (identischer Länge).

Bevorzugt wird ein Mittelwert A(1,1),..., A(N,M_{N}) jeweils über die I Ausführungszeiten Tᵢ(1,1) ,..., Tᵢ(N,M_{N}) gebildet. Auf diese Art und Weise lassen sich die periodischen Schwankungen in den Messdaten gemittelt bestimmen. So beinhaltet der Vektor A die mittleren Startzeitpunkte und Ausführungsdauern und damit das mittlere Timingverhalten, welches alle periodischen Laufzeitveränderungen erfasst. Ein abwechselnd kurz und lang laufender Task bekommt damit z.B. einen numerisch kleinen und einen numerisch großen Eintrag für seine Ausführungszeit. Gäbe es nun keine nicht-deterministischen Einflüsse im Prozessor, so wäre die Laufzeitschwankung des Tasks vollständig als periodisch identifiziert, wenn die Abweichung vom Mittelwert A Null ist. Das Bedeutet im Umkehrschluss, dass es nicht-deterministische, aperiodische Einflüsse gibt, wenn es Abweichungen vom Mittelwert A gibt. Diese lassen sich durch Subtraktion des Mittelwertes von einem konkreten Messvektor Tᵢ berechnen und untersuchen.

Ein bevorzugter Aspekt sieht vor, Abweichungen Vᵢ(1,1) Vᵢ(N,M_{N}) von dem durch A gemessenen periodischen Anteil bei den Ausführungszeiten Tᵢ(1,1) , ..., Tᵢ(N,M_{N}) zu bestimmen, indem von den M Ausführungszeiten Tᵢ(1,1), ..., Tᵢ(N,M_{N}) jeweils der Mittelwert A(1,1),...,A(N,M_{N}) abgezogen wird. Die Abweichungen Vᵢ(1,1),...,Vᵢ(N,M_{N}) vom Mittelwert A(1,1),...,A(N,M_{N}) sind die nicht periodische Anteile an den Ausführungszeiten Tᵢ(1,1), ..., Tᵢ(N,M_{N}). Nicht periodische Anteile entstehen aufgrund von nicht deterministischen Einflüssen, zum Beispiel wenn ein Task auf eine nicht vom System beeinflusste Größe reagiert (z.B. Sensoreingabe).

Ein ferner bevorzugter Aspekt sieht vor, dass das Vorzeichen der Abweichungen Vᵢ(1,1),...,Vᵢ(N,M_{N}) bestimmt wird. Dabei werden die Abweichungen Vᵢ(1,1),...,Vᵢ(N,M_{N}) anhand des Vorzeichens in Laufzeitverkürzungen und Laufzeitverlängerungen klassifiziert. Die nicht periodischen Anteile (Abweichungen Vᵢ(1,1),...,Vᵢ(N,M_{N})) haben ein Vorzeichen. Zum Beispiel bestimmt ein positives Vorzeichen eine (aperiodische) Laufzeitverlängerung und ein negatives Vorzeichen eine (aperiodische) Laufzeitverkürzung.

Ein anderer Aspekt sieht vor, dass die Zeitdauer der Abweichungen Vᵢ(1,1),...,Vᵢ(N,M_{N}) bestimmt wird, und wobei die Zeitdauer der Abweichungen Vᵢ(1,1),...,Vᵢ(N,M_{N}) mit einer vorbestimmten Zeitdauer verglichen wird, um kritische und unkritische Abweichungen zu bestimmen. So können kritische Abweichungen, die länger sind als eine vorbestimmte Zeitdauer aussortiert werden.

Bevorzugt wird die Kovarianz für die Abweichungen Vᵢ(1,1),...,Vᵢ(N,M_{N}) bestimmt, und anhand derer statistisch korrelierende Laufzeiterhöhungen identifiziert werden. Die Kovarianz zweier Taskdurchläufe ist kleiner 0, wenn Abweichungen statistisch in die entgegengesetzte Richtung (z.B. Laufzeitverlängerung gegen Laufzeitverkürzung) auftreten und größer 0, wenn die Richtung gleich ist. So kann abhängig vom Vorzeichen Kovarianz eine kritische gemeinsame Laufzeiterhöhung identifiziert werden.

Ein weiterer bevorzugter Aspekt der Erfindung betrifft ein Steuergerät umfassend einen Rechner und einen Speicher, welches Steuergerät gemäß dem voranstehend ausgeführten Verfahren ausgelegt ist bzw. derart eingerichtet ist, dass ein Tasksystem mit einer entsprechend ermittelten maximalen Laufzeit damit ausgeführt wird. Besonders bevorzugt ist mindestens ein Task ein Steuervorgang (Einstellung der Fahrwerksparameter) oder eine Regelvorgang (Prüfen der befahrenen Straße oder Witterungsverhältnisse) eines elektronischen Fahrwerks.

Im Folgenden wird die Erfindung anhand der in den beigefügten Zeichnungen dargestellten Beispiele näher erläutert.

Es zeigen:
- Fig. 1: Darstellung eines Tasksystems aus zwei Tasks;
- Fig. 2: Tabelle mit Standardabweichungen;
- Fig. 3: Beispielvektor der Laufzeitdynamik;
- Fig. 4: Darstellung unkorrelierter, gleichverteilter Ausführungszeiten;
- Fig. 5: Darstellung Erwartungswert;
- Fig. 6: Darstellung Standardabweichung; und
- Fig. 7: Darstellung der Schwankung der Ausführungszeit.

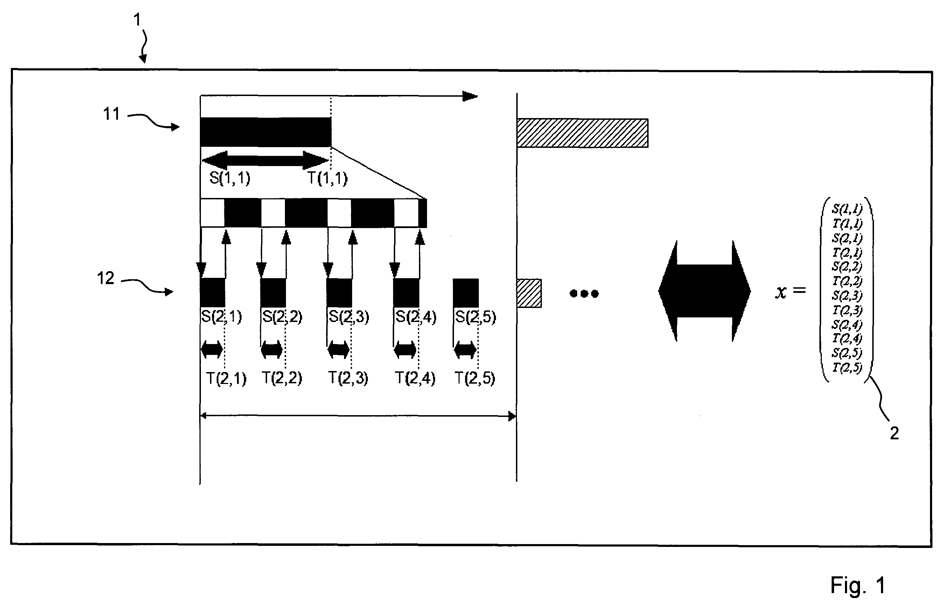

**Fig. 1** zeigt ein Steuergerät 1 anhand dem das Verfahren zur Ermittlung der Dynamik eines Tasksystems aus zwei verschiedenen periodischen Tasks 11, 12 beschrieben werden kann. Bei den beiden periodischen Tasks 11, 12 hat Task 11 eine Periode von 5 ms und Task 12 eine Periode von 1 ms. Das kleinste gemeinsame Vielfache der beiden Periodendauern ergibt 5 ms als Messperiode (Hyperperiode). Innerhalb der Messperiode gibt es sechs Taskaktivierungen M. Zur Darstellung des Tasksystems aus dem Task 11 und dem Task 12 wird ein identisch aufgebauter Vektor 2 mit zwölf Einträgen gewählt. In Vektor 2 werden für jede Messperiode Startzeiten S₁, ..., S₆ und Endzeiten E₁, ..., E₆ aller Taskaktivierungen eingetragen, so dass anhand der Vektoren 2 aus verschiedenen Messperioden sich die Zeiten aus verschiedenen Messperioden einander zuordnen bzw. miteinander vergleichen lassen. Der Vergleich der Vektoren 2 ermöglicht die Bestimmung der Abweichungen in verschiedenen Messperioden I. Aus allen Taskaktivierungen lassen sich die M maximalen Ausführungszeiten T(1,1)ₘₐₓ , ...,T(n,M_{N})ₘₐₓ über alle I Messperioden bestimmen und damit die maximalen Laufzeit für das Tasksystem aus der Summe aller M_{N} maximalen Ausführungszeiten T(n,1)ₘₐₓ , ... , T(n,M_{N})ₘₐₓ ermitteln.

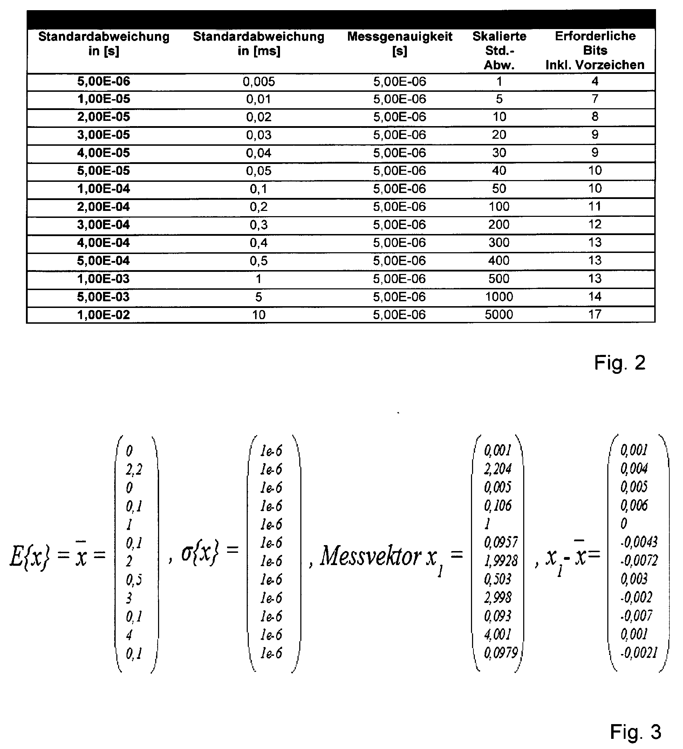

**Fig. 2** ist ein Beispiel für eine Standardabweichung von Ausführungszeiten, die über viele Messperioden ermittelt wurden.

In **Fig. 3** ist eine Darstellung bei der Anwendung des Verfahrens zur Analyse von während einer Echtzeitmessung ermittelten Ausführungszeiten. Die Darstellung erfolgt am Beispiel des Tasksystems aus Fig. 1. Bei der Analyse eines Tasksystems geht es darum, den zeitlichen Ablauf der Abarbeitung von Tasks auf einem Steuergerät zu bewerten.

Von links nach rechts ist der erste Vektor der Erwartungswert der Ausführungszeiten. Der zweite Vektor von links ist die Standardabweichung der Ausführungszeiten. Beide wurden über eine Vielzahl an Messperioden bestimmt. Der dritte Vektor von links sind die Ausführungszeiten und ganz rechts steht der Vektor mit den um den Erwartungswert reduzierten Ausführungszeiten.

Im Stand der Technik wird eine WCET für jeden Tasks angenommen. Bei einer solchen Systemauslegung führt dies dazu, dass für alle Ausführungen des Tasks 2 eine Zeit von 0,5 ms angenommen werden muss, da die des Tasks bei 0,5 ms liegt. Daher wird angenommen, dass das System durch Task 2 zu 50% ausgelastet ist.

Bei einer einfachen statistischen Analyse bekommt man den Mittelwert (Summe der Ausführungszeiten durch die Anzahl der Ausführungszeiten) 0,18 ms für die Ausführungszeit, welcher keine Information trägt, da diese Ausführungszeit die Wahrscheinlichkeit 0 besitzt. Die mittlere Auslastung liegt daher aber bei 18%. Im Unterschied dazu ist die tatsächliche Auslastung aus der Vektordarstellung direkt ablesbar.

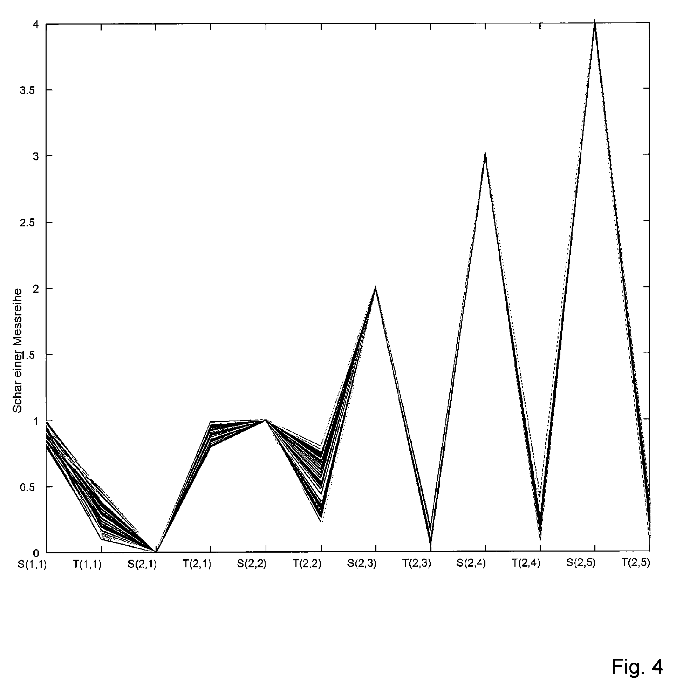

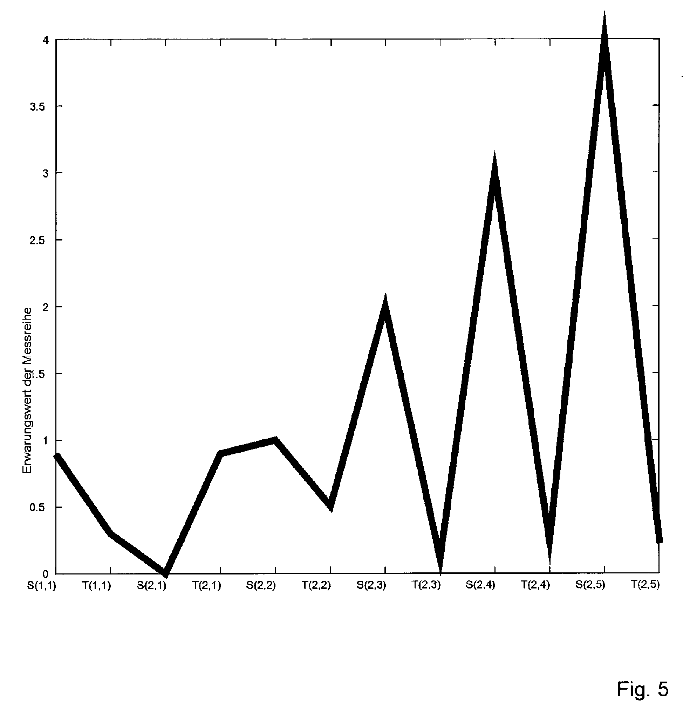

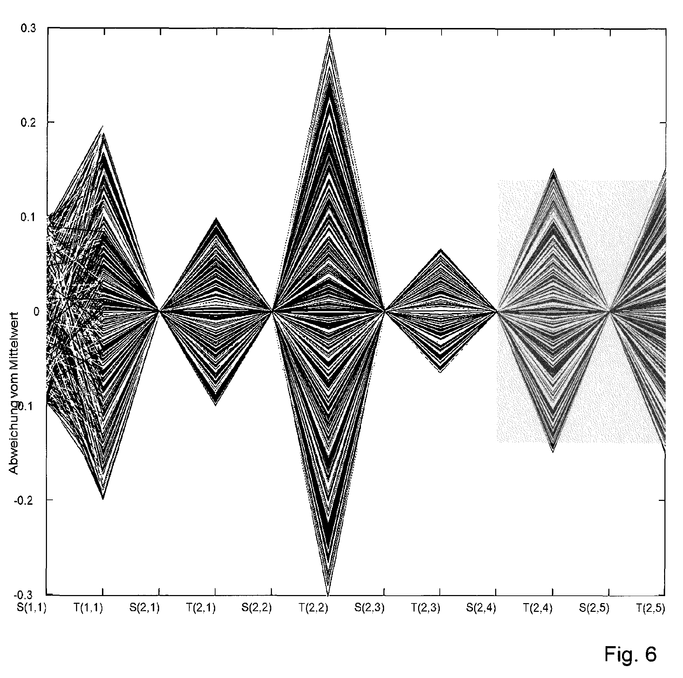

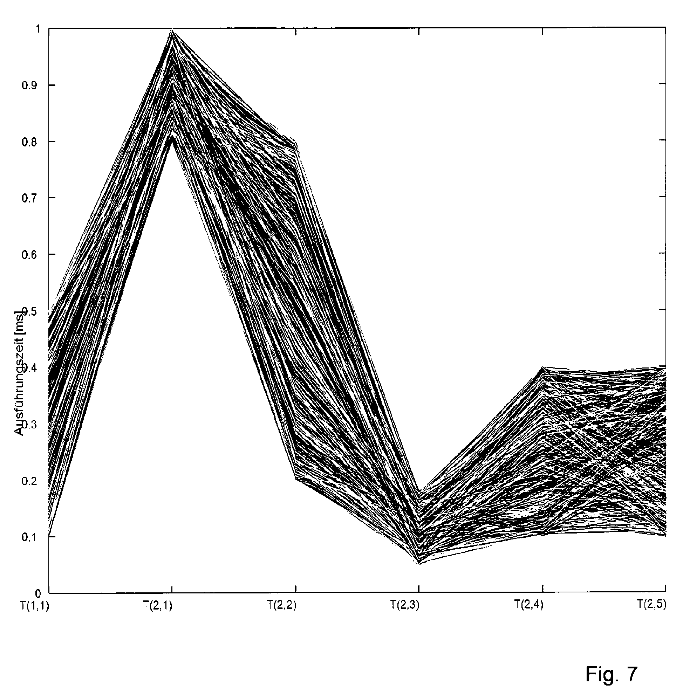

**Fig. 4** ist eine Schar von Messungen maximalen Ausführungszeiten T(1,1)ₘₐₓ,...,T(n,M_{N})ₘₐₓ über alle I Messperioden des in Fig. 1 dargestellten Tasksystems. Diese Form der Darstellung eignet sich besser für eine Diskussion als ihre Matrixform. **Fig. 5** zeigt den vektorwertigen Erwartungswert (Mittelwert A(1,1),...,A(N,M_{N}) für die in Fig. 5 dargestellte Messreihe. Die Daten enthalten deterministische Anteile, wie die Startwerte. **Fig. 6** zeigt die Abweichung Vᵢ(1,1),...,Vᵢ(N,M_{N}) der Schar vom Erwartungswert der Messreihe. **Fig. 7** zeigt die Messschar, wobei hier nur die Ausführungszeiten gewählt sind. An der Schar kann man sehen, dass die Ausführungszeit des Tasks 2 systematisch schwankt. Die maximale Laufzeit ergibt sich in dieser Darstellung aus der Summe der (am oberen Rand der graphischen Darstellung) abgelesenen maximalen Ausführungszeiten.

## Patentansprüche

1. Verfahren zur Ermittlung einer maximalen Laufzeit für ein Tasksystem aus N verschiedenen periodischen Tasks (11, 12) auf einem Steuergerät umfassend einen Rechner und einen Speicher, wobei jeder von dem Rechner periodisch abzuarbeitende Task (11, 12), eine Startzeit S, eine Endzeit E, eine Ausführungszeit T und eine Periodendauer O ab einem gemeinsamen Startzeitpunkt bis zum Aktivierungszeitpunkt des jeweiligen Tasks hat, mit folgenden Schritten:
- Bestimmen der Periodendauer O₁,...,O_{N} von allen n = 1...N Tasks (11, 12) des Tasksystems;
- Festlegen einer Messperiode K als das kleinste gemeinsamen Vielfache der auftretenden Periodendauern O₁,...,O_{N} der N Tasks (11, 12);
- Festlegung der Häufigkeit M₁,...,M_{N} für jede Taskaktivierung innerhalb der Messperiode als Quotient der einzelnen Periodendauern und der Messperiode K zu M₁ =K/O₁,... ,M_{N}=K/O_{N};
- Bestimmen der Gesamtanzahl an Taskaktivierungen M innerhalb der Messperiode K als die Summe der einzelnen Häufigkeiten zu M=M₁+M₂+...+M_{N};
- Bestimmen aller M Startzeiten S(1,1),...,S(N,M_{N}) und Endzeiten E(1,1),...,E(N,Mₙ), aller M Startzeiten S(1,1),...,S(N,M_{N}) und Ausführungszeiten T(1,1),...,T(N,M_{N}) oder aller M Endzeiten E(1,1),..., E(N,M_{N}) und Ausführungszeiten T(1,1),...,T(N,M_{N}), wobei diese in der Form
a) xᵢ=(S(1,1), E(1,1), S(1,2), E(1,2)...,S(1,M₁),...,S(n,1),...,E(N,M_{N}); oder
b) xᵢ(S(1,1), T(1,1), S(1,2), T(1,2) .... S(1,M₁),...,S(n,1),...,T(N,M_{N}); oder
c) xᵢ=(T(1,1), E(1,1), T(1,2), E(1,2) .... T(1,M₁),...,T(n,1),...,E(N,M_{N}); jeweils für jede der i Messperioden i=1,.., I einander zuordenbar gespeichert werden;
- Bestimmung von M maximalen Ausführungszeiten T(1,1)ₘₐₓ,...,T(n,M_{N})ₘₐₓ über alle I Messperioden; und
- Ermittlung der maximalen Laufzeit für das Tasksystem aus der Summe aller M_{N} maximalen Ausführungszeiten T(n,1)ₘₐₓ, ..,T(n,M_{N})ₘₐₓ.

2. Verfahren nach Anspruch 1, wobei zur Ermittlung einer maximalen Prozessorlast P innerhalb aller I Messperioden der Quotient der Summe aller M maximalen Ausführungszeiten T(1,1)ₘₐₓ,... ,T(N,M_{N})ₘₐₓ und der Messperiode K gebildet wird.

3. Verfahren nach Anspruch 1 oder 2, wobei Anhand der M maximalen Ausführungszeiten T(1,1)ₘₐₓ,... ,T(N,M_{N})ₘₐₓ eine Abarbeitungsfolge der Taskaktivierungen gebildet wird, bei der die maximale Laufzeit minimal ist.

4. Verfahren nach einem der vorangehenden Ansprüche, wobei der Schritt der Bestimmung von M maximalen Ausführungszeiten T(1,1)ₘₐₓ,...,T(N,M_{N})ₘₐₓ für mindestens zwei Messperioden i=1,...,1 durchgeführt wird, und wobei ein Mittelwert A(1,1),...,A(N,M_{N}) über mindestens zwei I jeweiligen Ausführungszeiten Tᵢ(1,1),..., Tᵢ(N,M_{N}) gebildet wird.

5. Verfahren nach Anspruch 4, wobei Abweichungen Vᵢ(1,1),...,Vᵢ(N,M_{N}) bei den Ausführungszeiten Tᵢ(1,1),...,Tᵢ(N,M_{N}) bestimmt werden, indem von den M Ausführungszeiten Tᵢ(1,1),...,Tᵢ(N,M_{N}) jeweils der Mittelwert A(1,1),...,A(N,M_{N}) abgezogen wird.

6. Verfahren nach Anspruch 5, wobei das Vorzeichen der Abweichungen Vᵢ(1,1),...,Vᵢ(N,M_{N}) bestimmt wird, und wobei die Abweichungen Vᵢ(1,1),...,Vi(N,M_{N}) anhand des Vorzeichens in Laufzeitverkürzungen und Laufzeitverlängerungen klassifiziert werden.

7. Verfahren nach Anspruch 5 oder 6, wobei die Zeitdauer der Abweichungen Vᵢ(1,1),...,Vᵢ(N,M_{N}) bestimmt wird, und wobei die Zeitdauer der Abweichungen Vᵢ(1,1),...,Vᵢ(N,M_{N}) mit einer vorbestimmten Zeitdauer verglichen wird, um kritische und unkritische Abweichungen zu bestimmen.

8. Verfahren nach einem der Ansprüche 5 bis 7, wobei ein Vorzeichen der Kovarianz für die Abweichungen Vᵢ(1,1),...,Vᵢ(N,M_{N}) bestimmt wird, und wobei anhand der Vorzeichen gemeinsame Laufzeiterhöhung identifiziert werden.

9. Steuergerät umfassend einen Rechner und einen Speicher, welches Steuergerät gemäß dem Verfahren nach einem der vorangehenden Ansprüche ausgelegt ist.

10. Steuergerät nach Anspruch 9, auf dem mindestens ein Task ein Steuervorgang oder eine Regelvorgang für ein elektronisches Fahrwerk ist.
